# EUROPÄISCHE PATENTSCHRIFT

(11) **EP 1 128 172 B1**
(45) Veröffentlichungstag und Bekanntmachung des Hinweises auf die Patenterteilung: **06.04.2011**
(21) Anmeldenummer: 00103681.3
(22) Anmeldetag: 22.02.2000
(51) Int. Cl.: G01L 9/00

(54) **Drucksensor**
Pressure sensor
Capteur de pression

(43) Veröffentlichungstag der Anmeldung: 29.08.2001
(73) Patentinhaber: Endress + Hauser GmbH + Co. KG, 79689 Maulburg (DE)
(72) Erfinder: Gerst, Peter Dipl.-Phys., 79576 Weil am Rhein (DE); Banholzer, Karlheinz Dipl.-Ing., 79688 Hausen (DE); Flögel, Karl Dipl.-Ing., 79650Schopfheim (DE); Uehlin, Thomas Dipl.-Ing., 79650 Schopfheim (DE)
(74) Vertreter: Andres, Angelika Maria

(56) Entgegenhaltungen:
- WO-A-99/32866
- DE-A- 3 820 418
- US-A- 4 501 051
- US-A- 4 542 435
- US-A- 4 798 089
- US-A- 5 212 989
- US-A- 5 656 780

## Beschreibung

Die Erfindung betrifft einen Drucksensor.

In der Druckmeßtechnik werden z.B. Absolut- und Relativdrucksensören verwendet. Bei Absolutdrucksensoren wird ein zu messender Druck absolut, d.h. als Druckunterschied gegenüber einem Vakuum erfaßt. Mit einem Relativdrucksensor wird ein zu messender Druck in Form eines Druckunterschiedes gegenüber einem Referenzdruck, z.B. einem Druck, der dort herrscht, wo sich der Sensor befindet, aufgenommen. Bei den meisten Anwendungen ist dies der Atmosphärendruck am Einsatzort. Es wird also beim Absolutdrucksensor ein zu messender Druck bezogen auf einen festen Bezugsdruck, den Vakuumdruck, und beim Relativdrucksensor ein zu messender Druck bezogen auf einen variablen Bezugsdruck, z.B. den Umgebungsdruck, erfaßt.

Es werden in der Druckmeßtechnik vorteilhaft keramische Druckmeßzellen eingesetzt, da keramische Druckmeßzellen eine Meßgenauigkeit aufweisen, die über sehr lange Zeit stabil ist. Ein Grund hierfür ist die feste ionische Bindung von Keramik, durch die der Werkstoff sehr dauerhaft ist und im Vergleich zu anderen Werkstoffen, z.B. Metallen, praktisch nicht altert. Keramische Drucksensoren weisen jedoch eine im Vergleich zu einem Metall rauhere Oberfläche auf und sind regelmäßig mittels einer in der Regel nicht auswechselbaren Dichtung aus einem organischen Material, z.B. einem Elastomer, druckfest in ein Gehäuse eingespannt, das dann über einen Prozeßanschluß an einem Meßort zu befestigen ist.

In der Lebensmittelindustrie werden bevorzugt frontbündig einbaubare Drucksensoren eingesetzt, bei denen alle mit einem Medium, dessen Druck es zu messen gilt, in Berührung kommenden Sensorelemente aus einem Metall, vorzugsweise aus einem sehr gut reinigbaren Edelstahl, bestehen.

In diesem Industriezweig ist es zusätzlich von besonderem Vorteil, wenn die Drucksensoren möglichst wenig Dichtungen aufweisen. Dichtungen bestehen aus organischen Materialien und sollten daher aus hygienischen Gründen vorzugsweise austauschbar sein. Im Idealfall ist nur eine einzige Dichtung zur Abdichtung des Prozeßanschlusses vorhanden. Diese, nachfolgend als Prozeßdichtung bezeichnete Dichtung, kann im Gegensatz zu einer zum Sensor gehörigen Dichtung vom Anwender selbst jederzeit problemlos, insb. ohne Auswirkung auf die Meßgenauigkeit des Drucksensors, ausgetauscht werden.

Es ist eine Aufgabe der Erfindung, einen unter anderem für die Lebensmittelindustrie geeigneten Drucksensor anzugeben, dessen Meßgenauigkeit über lange Zeit stabil ist.

Die Aufgabe wird gelöst durch den Drucksensor gemäß Anspruch 1.

Erfindungsgemäß ist die Meßzelle in einem Gehäuse einspannungsfrei fixiert, indem sie in axialer Richtung auf einem Röhrchen aufsitzt, über das die keramische Meßzelle mit dem Druckmittler verbunden ist.

Erfindungsgemäß weist die Meßzelle eine Meßmembran auf, die einen Innenraum der Meßzelle in eine erste und eine zweite Kammer unterteilt. Die erste Kammer ist über ein Röhrchen mit dem Druckmittler verbunden, die erste Kammer, das Röhrchen und der Druckmittler sind mit einer Flüssigkeit gefüllt, die Flüssigkeit überträgt einen auf die Trennmembran einwirkenden Druck auf die Meßmembran, in der zweiten Kammer wirkt ein Bezugsdruck auf die Meßmembran ein, und der Drucksensor weist einen elektromechanischen Wandler zur Erfassung einer vom Druck und vom Bezugsdruck abhängigen Auslenkung der Meßmembran und zu deren Umwandlung in ein elektrisches Ausgangssignal auf.

Erfindungsgemäß ist der Bezugsdruck ein in der Umgebung herrschender Referenzdruck und die zweite Kammer weist eine Öffnung auf, durch die der Referenzdruck in die zweite Kammer eingeleitet ist, oder die zweite Kammer ist hermetisch dicht verschlossen und der Bezugsdruck ist ein in der zweiten Kammer herrschender Absolutdruck.

Gemäß einer Ausgestaltung ist die Meßzelle zusätzlich in radialer Richtung in eine Halterung eingefaßt.

Gemäß einer Ausgestaltung weist die Halterung einen einen Zwischenraum zwischen der Meßzelle und dem Gehäuse ausfüllenden Körper aus einem Elastomer auf. Untersuchungen haben gezeigt, daß bei einer auf herkömmliche Weise mittels eines organischen Werkstoffes, z.B. einer Dichtung aus einem Elastomer, druckfest eingespannten keramischen Meßzelle Druckmittler nicht ohne sehr große Einbußen in der Meßgenauigkeit einsetzbar sind. Durch Temperatur- und/oder Druckwechsel kann es zu Lage- und/oder Formveränderungen der Dichtung kommen, die mit einer Verschiebung von Druckmittlerflüssigkeit verbunden sind. Bei einem Druckmittler wird durch eine Druckänderung nur eine geringe Menge der Druckmittlerflüssigkeit verschoben. Liegen dichtungs-bedingte Volumenverschiebunge in der gleichen Größenordnung wie druck-bedingte Volumenverschiebungen, so ist eine sinnvolle Messung nicht mehr möglich.

Üblicherweise verwendete Dichtungsmaterialien sind Kunststoffe wie z.B. Polytetrafluorethylen oder Viton. Diese Werkstoffe sind nicht gasdicht. Wenn auf den Drucksensor ein Unterdruck einwirkt, kann durch die Dichtung Luft oder Gas von einer druckmittler-abgewandten Seite des Drucksensors in die Druckmittlerflüssigkeit eindiffundieren. Luft oder Gas in der

Druckmittlerflüssigkeit beeinträchtigt die Meßgenauigkeit des Drucksensor stark.

Aufgrund des erfindungsgemäßen Anschlusses des Druckmittlers mittels Verbindungen aus anorganischen Materialien kann vollständig auf Dichtungen verzichtet werden. Es ist damit erstmals möglich, eine keramische Druckmeßzelle in Verbindung mit einem Druckmittler einzusetzen und die Vorteile der keramischen Meßzellen, nämlich deren über sehr lange Zeit stabile Meßgenauigkeit in Verbindung mit einem Druckmittler auszunutzen.

Mechanische Verbindungen bzw. Anschlüsse aus anorganischen Materialien können z.B. Schweißungen oder Lötungen, insb. Aktivhartlötungen, sein. Solche metallischen Fügungen bieten den Vorteil, daß sie gasdicht und im Vergleich zu Anschlußweisen mittels organischen Materialien, wie z.B. mittels eingespannten Dichtungen, mechanisch unbeweglich und weitestgehend kriechfrei sind. Über Druck- und/oder Temperaturwechsel tritt somit bei einem erfindungsgemäßen Drucksensor keine bleibende Verformung der Verbindungsmaterialien an den Anschlußstellen auf, die zu einer Verschlechterung der Meßgenauigkeit führen könnte. Die Meßgenauigkeit der erfindungsgemäßen Drucksensoren kann daher über sehr lange Zeiträume garantiert werden.

Ein weiterer Vorteil besteht darin, daß trotz der Verwendung einer keramischen Druckmeßzelle, abgesehen von der Prozeßdichtung, nur metallische Materialien mit dem Medium, dessen Druck es zu messen gilt, in Berührung kommen. Durch die Verwendung des Druckmittlers ist es möglich das von dem Medium berührte Metall innerhalb weiter Grenzen frei entsprechend den mechanischen und/oder chemischen Eigenschaften des Mediums auszuwählen.

Es gibt auch Anwendungen, bei denen der Druckmittler direkt am Meßort in einem sogenannten Einschweißstutzen, d.h. einem auf dem Behälter aufgeschweißten Stutzen, montiert werden. Die Abdichtung erfolgt in Einschweißstutzen üblicherweise rein metallisch, z.B. über Dichtkoni. In diesen Fällen entfällt sogar die Prozeßdichtung.

Die Erfindung und weitere Vorteile werden nun anhand der Figuren der Zeichnung, in denen ein Ausführungsbeispiel dargestellt ist, näher erläutert. Gleiche Elemente sind in den Figuren mit den gleichen Bezugszeichen versehen.
- Fig. 1: zeigt einen Schnitt durch einen erfindungsgemäßen Drucksensor, bei dem eine keramische Meßzelle auf einem Röhrchen fixiert ist, mittels dem sie mit einem Druckmittler verbunden ist; und
- Fig. 2: zeigt eine vergrößerte Darstellung der Meßzelle von Fig. 1;

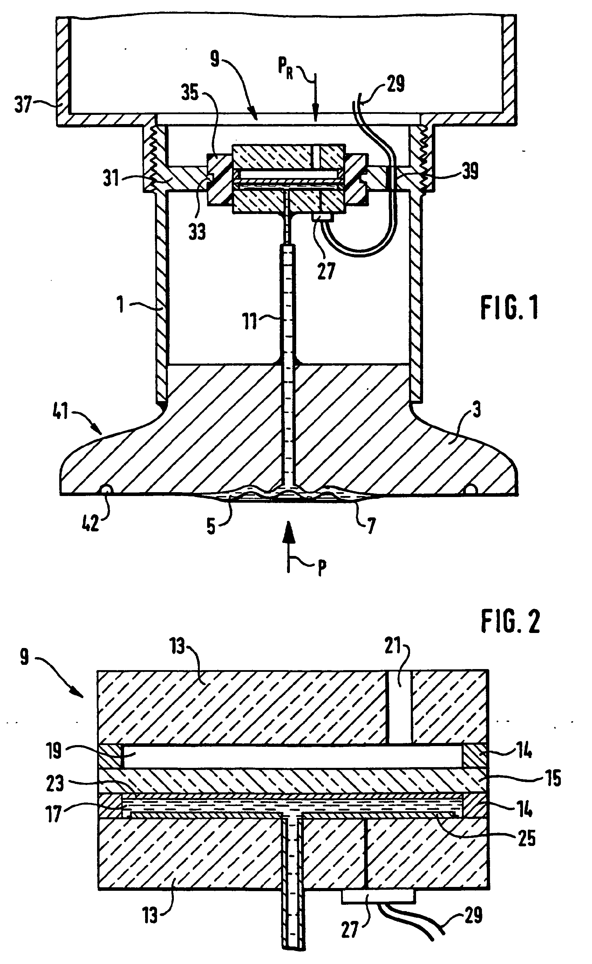

In Fig. 1 ist ein Schnitt durch einen erfindungsgemäßen Drucksensor dargestellt. Der Drucksensor umfaßt ein im wesentlichen zylindrisches Gehäuse 1, in dessen eines Ende ein Druckmittler 3 eingefaßt ist. Er ist in das Gehäuse 1 eingeschweißt. Der Druckmittler 3 weist eine mit einer Flüssigkeit gefüllte Kammer 5 auf, die von einer Trennmembran 7 verschlossen ist. Im Betrieb wirkt auf die Trennmembran 7 ein zu messender Druck P ein, der in Fig. 1 durch einen Pfeil angedeutet ist.

In dem Gehäuse 1 ist eine keramische Meßzelle 9 angeordnet, die über ein mit der Flüssigkeit gefülltes Röhrchen 11 mit der Kammer 5 des Druckmittlers 3 verbunden ist.

Fig. 2 zeigt eine vergrößerte Darstellung der Meßzelle 9. Sie umfaßt zwei zylindrische Grundkörper 13 und eine zwischen den beiden Grundkörpern eingefaßte Meßmembran 15.

Die Meßzelle 9 ist eine keramische Meßzelle, d.h. die Grundkörper 13 und die Meßmembran 15 bestehen aus Keramik. Die Meßmembran 15 ist mit jedem der Grundkörper 1 an deren dem jeweiligen Grundkörper 13 zugewandten Rand mittels einer Fügestelle 14 druckdicht und gasdicht verbunden. Als Fügematerial eignet sich z.B. ein Aktivhartlot. Die Meßmembran 15 ist druckempfindlich, d.h. ein auf sie einwirkender Druck bewirkt eine Auslenkung der Meßmembran 15 aus deren Ruhelage.

Durch die Meßmembran 15 und die Fügestellen 14 ist ein Innenraum der Meßzelle 9 in eine erste Kammer 17 und eine zweite Kammer 19 unterteilt. Die keramische Meßzelle 9 ist an den Druckmittler 3 ausschließlich mit anorganischen Materialien angeschlossen. Hierzu eignen sich z.B. Verbindungs- bzw. Fügetechniken wie Löten oder Schweißen. In dem in Fig. 1 dargestellten Ausführungsbeispiel ist die erste Kammer 17 über das Röhrchen 11 mit dem Druckmittler 3 verbunden. Das Röhrchen 11 ist z.B. an dem Druckmittler 3 angeschweißt und an dem Grundkörper 13 durch eine Lötung befestigt. Es ist keine Dichtung aus einem organischen Material erforderlich.

Die erste Kammer 17 ist genauso wie der Druckmittler 3 und das Röhrchen 11 mit Flüssigkeit gefüllt. Ein auf die Trennmembran 7 einwirkender Druck P wird durch die Flüssigkeit auf die Meßzelle 9 in die erste Kammer 17 übertragen. Die Flüssigkeit ist möglichst inkompressibel und weist einen möglichst geringen thermischen Ausdehnungskoeffizienten auf. Es eignen sich z.B. im Handel erhältliche Silikonöle. Zusätzlich ist die erforderliche Füllmenge vorzugsweise gering zu halten, indem das Röhrchen 11 einen geringen Durchmesser aufweist und der Druckmittler 3 in der Kammer 5 ein Membranbett aufweist, das der Form der Trennmembran 7 nachempfunden ist und in geringem Abstand von der Trennmembran 7 angeordnet ist.

Für den Fall, daß der Drucksensor in explosionsgefährdeten Bereichen eingesetzt werden soll, kann in dem Röhrchen 11 eine Flammendurchschlagsperre angeordnet sein oder das Röhrchen 11 selbst kann aufgrund dessen Abmessungen eine Flammendurchschlagsperre bilden. Der Aufbau einer solchen Flammendurchschlagsperre ist den nationalen Sicherheitsvorschriften und Normen zum Explosionsschutz entnehmbar.

In dem in Fig. 1 dargestellten Ausführungsbeispiel weist die zweite Kammer 19 eine Öffnung 21, hier eine den Grundkörper 13 durchdringende Bohrung, auf, durch die ein Bezugsdruck in die zweite Kammer 19 eingeleitet ist. Der Bezugsdruck ist ein im Drucksensor herrschender Referenzdruck P_{R}, hier ein Umgebungsdruck. Es handelt sich also um einen Relativdrucksensor.

Es kann anstelle des Umgebungsdrucks auch ein variabler Druck, z.B. über einen zweiten auf analoge Weise zu dem Druckmittler 3 angeschlossenen Druckmittler, in die zweite Kammer 19 eingeleitet sein. In diesem Fall ist die Auslenkung der Meßmembran abhängig von der Differenz der beiden auf sie einwirkenden Drücke.

Der erfindungsgemäße Drucksensor kann selbstverständlich auch als Absolutdrucksensor ausgebildet sein. In diesem Fall ist die zweite Kammer 19 evakuiert und hermetisch dicht verschlossen und der Bezugsdruck ist ein in der zweiten Kammer 19 herrschender Absolutdruck.

Die Meßzelle 9 weist einen elektromechanischen Wandler zur Erfassung einer vom Druck P und vom Bezugsdruck abhängigen Auslenkung der Meßmembran 15 und zu deren Umwandlung in ein elektrisches Ausgangssignal auf.

In dem in Fig. 1 und 2 dargestellten Ausführungsbeispiel umfaßt der elektromechanische Wandler einen Kondensator, der eine in der ersten Kammer 17 auf der Meßmembran 15 angeordnete Meßelektrode 23 und der eine der Meßelektrode 23 gegenüberliegend auf einer Innenwand der ersten Kammer 17 auf dem Grundkörper 13 angeordnete Gegenelektrode 25 aufweist. Die Kapazität des Kondensators hängt vom Abstand der Meßelektrode 23 und der Gegenelektrode 25 zueinander ab und ist somit ein Maß für die Auslenkung der Meßmembran 15.

Die Meßelektrode 23 ist durch die Fügestelle 14 hindurch elektrisch kontaktiert und außerhalb z.B. mit Masse verbunden. Die Gegenelektrode 25 ist durch den Grundkörper 13 hindurch zu dessen Außenseite hin elektrisch kontaktiert und führt zu einer auf dem Grundkörper 13 angeordneten elektronischen Schaltung 27. Meßelektrode 23 und Gegenelektrode 25 bilden einen Kondensator und die elektronische Schaltung 27 formt die Kapazitätsänderungen des Kondensators z.B. in eine sich entsprechend ändernde elektrische Spannung um.

Das Ausgangssignal steht über Anschlußleitungen 29 einer weiteren Verarbeitung und/oder Auswertung zur Verfügung.

Wenn der Drucksensor bei sehr hohen Temperaturen eingesetzt werden soll, empfiehlt es sich die elektronische Schaltung 27 in einiger Entfernung vom Druckmittler 3 und der keramischen Meßzelle 9 anzuordnen.

Selbstverständlich können auch mehr Elektroden in der ersten Kammer 17 auf dem Grundkörper 13 und/oder auf der Meßmembran 15 angeordnet sein. Es könnte z.B. statt der Gegenelektrode 25 eine kreisscheibenförmige innere Elektrode und eine diese umgebende äußere ringscheibenförmige Elektrode vorgesehen sein. Es würde die äußere Elektrode zusammen mit der Meßelektrode 23 einen zweiten Kondensator bilden, dessen Kapazität zu Kompensationszwecken dienen kann, während die innere Elektrode zusammen mit der Meßelektrode 23 eine vom Druck und vom Bezugsdruck abhängige Kapazität aufweist.

Als elektromechanische Wandler sind aber auch auf der Meßmembran 15 in der ersten Kammer 17 angeordnete piezoresistive Elemente oder Dehnungsmeßstreifen einsetzbar.

Ein großer Vorteil des vorbeschriebenen Drucksensors in der ausbildung als Relativdrucksensor ist, daß der elektromechanische Wandler vollständig vor Feuchtigkeit, z.B, durch Kondensat, und Verunreinigungen geschützt ist. Feuchtigkeit und/oder Verunreinigungen, wie sie typischerweise in der Atmosphäre in dem Drucksensor enthalten sind können sich ausschließlich in der zweiten Kammer 19 ablagern. Die erste Kammer 17, die den gegenüber Feuchtigkeit und/oder Verunreinigungen empfindlichen elektromechanischen Wandler enthält ist dagegen gegenüber der Umwelt verschlossen.

Die Meßzelle 9 ist in dem Gehäuse 1 fixiert, indem sie in axialer Richtung auf dem Röhrchen 11, über das die keramische Meßzelle 9 mit dem Druckmittler 3 verbunden ist, aufsitzt. Zusätzlich ist sie in radialer Richtung in eine Halterung eingefaßt. Eine druckfeste Einspannung, wie sie bei herkömmlichen keramischen Druckmeßzellen erforderlich ist, ist bei dem erfindungsgemäßen Drucksensor nicht nötig, da der Druck P durch den Druckmittler in die erste Kammer 17 eingeleitet ist und somit über das dünne Röhrchen 11 nur eine sehr geringe Kraft auf die Meßzelle 9 als Ganzes ausübt. Eine Einspannung übt generell eine, insb. druck- und temperatur-abhängige, Rückwirkung auf die Meßzelle aus. Dies kann, besonders wenn die Einspannung auf die Meßmembran zurückwirkt, zu einer Veränderung von Sensordaten des Drucksensors, z.B. dessen Nullpunkt oder dessen Temperaturkenndaten, und damit zu Meßfehlern führen.

Durch die einspannungsfreie Montage der keramischen Meßzelle 9 ist die ohnehin im Vergleich zu anderen Meßzellen über lange Zeit sehr stabile Meßgenauigkeit von keramischen Meßzellen noch weiter verbessert.

Bei dem in Fig. 1 dargestellten Ausführungsbeispiel ist an das Gehäuse 1 auf der Höhe der Meßzelle 9 eine sich radial nach innen erstreckende Schulter 31 angeformt, auf deren inneren Mantelfläche eine ringförmig umlaufende Feder 33 angeordnet ist. Ein zwischen dem Gehäuse 1 und Meßzelle 9 bestehender Zwischenraum ist von einem Körper 35 aus einem Elastomer ausgefüllt. Der Körper 35 weist eine außen ringförmig umlaufende Nut auf, in die die Feder 33 der Schulter 31 lose eingreift. Der Körper 35 umgreift die Meßzelle 9 und verhindert eine Auslenkung der auf dem Röhrchen 11 aufsitzenden Meßzelle 9 in radialer Richtung. In axialer Richtung ist die Meßzelle 9 dagegen beweglich, um thermische Ausdehnungsunterschiede ausgleichen zu können.

An das Gehäuse 1 schließt in druckmittler-abgewandter Richtung ein Anschlußgehäuse 37 an. In dem gezeigten Ausführungsbeispiel ist das Anschlußgehäuse 37 auf das Gehäuse 1 aufgeschraubt. In dem Anschlußgehäuse 37 ist beispielsweise eine, in Fig. 1 nicht dargestellte, weiterführende Elektronik angeordnet, in der die Meßsignale aufbereitet werden. Die Schulter 31 weist seitlich eine Bohrung 39 auf, durch die die Anschlußleitungen 29 hindurch geführt sind. Über die Anschlußleitungen 29 sind die Meßsignale einer weiteren Verarbeitung und/oder Auswertung zugänglich.

Auf einer von der Meßzelle 9 abgewandten Seite ist der Druckmittler 3 als ein Prozeßanschluß 41 ausgebildet. Der Prozeßanschluß 41 dient dazu, den Drucksensor an einem Meßort zu befestigen. In dem gezeigten Ausführungsbeispiel ist der Prozeßanschluß 41 ein Standardanschluß, wie er in der internationalen Norm ISO 2852 definiert ist. Dieser Anschluß ist in der Meßtechnik unter dem Handelsnamen 'Triclamp' bekannt. Andere Arten der Befestigung sind ebenfalls einsetzbar. Die Trennmembran 7 schließt frontbündig mit dem Prozeßanschluß 41 ab und bildet einen druck- und gasdichten Abschluß gegenüber dem Prozeß. Andere Arten der Befestigung, z.B. mittels einer Flansch- oder Schraubverbindung, sind ebenfalls einsetzbar.

Ein am Meßort herrschender Druck P wirkt direkt auf die Trennmembran 7 ein und wird über den Druckmittler 3 und die Flüssigkeit im Röhrchen 11 in die Meßzelle 9 übertragen.

Die Trennmembran 7 und alle weiteren mit einem Medium, dessen Druck zu messen ist, beim Messen in Kontakt kommenden Sensorbauteile, in dem gezeigten Ausführungsbeispiel der Prozeßanschluß 41, sind metallisch.

Metall bietet hier den großen Vorteil, daß ein solcher Sensor frontbündig einbaubar und somit gut zu reinigen ist.

Der erfindungsgemäße Drucksensor bietet den Vorteil, daß der Drucksensor selbst völlig ohne eine mit dem Medium in Berührung kommende Dichtung auskommt. Es ist lediglich eine einzige Dichtung, nämlich eine Prozeßdichtung zur Abdichtung des Meßortes gegenüber der Umgebung, erforderlich. Der Prozeßanschluß 41 weist eine ringförmig umlaufende Nut 42 zur Aufnahme dieser, in Fig. 1 nicht dargestellten, Prozeßdichtung auf. Die Prozeßdichtung kann jederzeit problemlos ausgetauscht werden und ein Austausch der Prozeßdichtung hat keinerlei Einfluß auf die Meßgenauigkeit des Drucksensors.

In einigen Anwendungen ist es möglich den erfindungsgemäßen Drucksensor direkt in einem sogenannten Einschweißstutzen, d.h. einem auf dem Behälter aufgeschweißten Stutzen, zu montieren. Die Abdichtung erfolgt in Einschweißstutzen üblicherweise rein metallisch, z.B. über Dichtkoni. Dies bietet gegenüber dem dargestellten Prozeßanschluß 41 den Vorteil, daß der Drucksensor nicht nur frontbündig angeordnet ist, sondern auch gänzlich ohne Dichtungen, auch ohne Prozeßdichtung, auskommt.

Der Drucksensor ist daher sehr gut für Anwendungen in der Lebensmittelindustrie geeignet, wo die Forderungen nach Reinigbarkeit, Dichtungsfreiheit und nach metallischen Werkstoffen besonders hohen Stellenwert haben.

Bei der in den Figuren 1 und 2 dargestellten Meßzelle 9 handelt es sich um eine Relativdruckmeßzelle. Es wird der zu messende Druck P bezogen auf den Bezugsdruck erfaßt, wobei der Bezugsdruck hier der variable Umgebungsdruck ist. Es kann auf völlig analoge Weise zu dem zuvor beschriebenen Relativdrucksensor auch ein Absolutdrucksensor aufgebaut sein. Bei einem solchen Absolutdrucksensor entfällt die Öffnung 21, und die zweite Kammer 19 ist evakuiert. Entsprechend ist der Bezugsdruck dann der feste Vakuumdruck in der zweiten Kammer.

## Patentansprüche

1. Drucksensor mit
- einem Druckmittler (3, 45) mit einer Trennmembran (7, 53)
-- auf die ein zu messender Druck (P) einwirkt, und
- einer ausschließlich mit anorganischen Materialien an den Druckmittler (3, 45) angeschlossenen keramischen Messzelle (9, 57),
- bei dem die Trennmembran (7, 53) und alle weiteren mit einem Medium, dessen Druck (P) zu messen ist, bein Messen In Kontakt kommenden Sensorbauteile metallisch sind, bei dem die Messzelle (9) in einem Gehäuse (1) einspannungsfrei fixiert ist, indem sie in axialer Richtung auf einem Röhrchen (11) aufsitzt, über das die keramische Messzelle (9) mit dem Druckmittler (3) verbunden ist,
- bei dem die Messzelle (9) einen Messmembran (15) aufweist,
-- die einen innenraum der Messzelle (9) in eine erste und eine zweite Kammer (17, 19) unterteilt,
bei dem die erste Kammer (17) über das Röhrchen (11) mit dem Druckmittler (3) verbunden ist,
- bei dem die erste Kammer (17), das Röhrchen (11) und der Druckmittler (11) mit einer Flüssigkeit gefügt sind.
- bei dem die Flüssigkeit einen auf die Trennmembran (7) einwirkenden Druck (P) auf die Messmembran (15) überträgt,
- bei dem in der zweiten Kammer (19) ein Bezugsdruck auf die Messmembran (15) einwirkt, und
- der einen elektromechanischen Wandler zur Erfassung einer vom Druck (P) und vom Bezugsdruck abhängen Auslenkung der Messmembran und zu deren Umwandlung in ein elektrisches Ausgangssignal aufweist und bei dem
- der Bezugsdruck ein in der Umgebung herrschender Referenzdruck ist, und die zweite Kammer (19) eine Öffnung (21) aufweist, durch die er Bezugsdruck in die zweite Kammer (19) eingeleitet wird, oder die zweite Kammer hermetisch dicht verschlossen und der Bezugsdruck ein in der zweiten Kammer herrschender Absolutdruck ist.

2. Drucksensor nach Anspruch 1, bei dem die Messzelle (9) zusätzlich In radialer Richtung in eine Halterung eingefasst ist.

3. Drucksensor nach Anspruch 2 bei dem die Halterung einen einen Zwischenraum zwischen der Messzelle (9) und dem Gehäuse (1) ausfüllenden Körper (35) aus einem Elastomer aufweist.

## Claims

1. Pressure sensor with
- a diaphragm seal (3, 45) with a process isolating diaphragm (7, 53)
-- on which a pressure (P), which has to be measured, acts and
- a ceramic measuring cell (9, 57) which is connected to the diaphragm seal (3, 45) exclusively with inorganic materials
- where the process isolating diaphragm (7, 53) is metal, as are all the other sensor components that come in contact, during the measurement process, with a medium whose pressure (P) is to be measured, where the measuring cell (9) is fixed without restraint in a housing (1) by resting in the axial direction on a pipe (11) via which the ceramic measuring cell (9) is connected to the diaphragm seal
- where the measuring cell (9) has a measuring diaphragm (15)
-- which divides the inside of the measuring cell (9) into a first and second chamber (17, 19), where the first chamber (17) is connected to the diaphragm seal (3) via the pipe (11)
- **characterized in that** the first chamber (17), the pipe (11) and the diaphragm seal (11) are filled with a liquid
- **characterized in that** the liquid transmits a pressure (P), which acts on the process isolating diaphragm (7), to the measuring diaphragm (15)
- **characterized in that** a reference pressure acts on the measuring membrane (15) in the second chamber (19) and
- which has an electromechanical converter for recording a deflection of the measuring membrane, which depends on the pressure (P) and the reference pressure, and for converting this to an electric output signal, and where
- the reference pressure is a reference pressure present in the surrounding environment, and the second chamber (19) has an opening (21) through which the reference pressure is routed into the second chamber (19), or the second chamber is hermetically sealed and the reference pressure is an absolute pressure present in the second chamber.

2. Pressure sensor as per Claim 1, where the measuring cell (9) is also held in a bracket in the radial direction.

3. Pressure sensor as per Claim 2, where the bracket has an elastomer body (35) which fills an intermediate chamber between the measuring cell (9) and the housing (1).

## Revendications

1. Capteur de pression avec
- un séparateur (3, 45) avec une membrane de séparation (7, 53)
-- sur laquelle agit une pression (P) à mesurer, et
- une cellule de mesure (9, 57) céramique, raccordée exclusivement avec des matériaux inorganiques au séparateur (3, 45),
- pour lequel la membrane de séparation (7, 53) et tous les autres composants du capteur entrant en contact, lors de la mesure, avec un produit, dont la pression (P) est à mesurer, sont métalliques, pour lequel la cellule de mesure (9) est fixée dans un boîtier (1), sans serrage, en ce qu'elle repose en direction axiale sur un tube (11), par l'intermédiaire duquel la cellule de mesure (9) céramique est reliée avec le séparateur (3),
- pour lequel la cellule de mesure (9) présente une membrane de mesure (15),
-- qui scinde un espace intérieur de la cellule de mesure (9) en une première et une deuxième chambre (17, 19),
pour lequel la première chambre (17) est reliée avec le séparateur (3) par l'intermédiaire du tube (11),
- pour lequel la première chambre (17), le tube (11) et le séparateur (3) sont remplis d'un liquide,
- pour lequel le liquide transmet une pression (P), agissant sur la membrane de séparation (7), à la membrane de mesure (15),
- pour lequel une pression de référence agit, dans la deuxième chambre (19), sur la membrane de mesure (15), et
- qui présente un convertisseur électromécanique destiné à la mesure d'une pression (P) et d'une déviation fonction de la pression de référence de la membrane de mesure, et un signal de sortie électrique correspondant à sa conversion, et pour lequel
- la pression de référence est une pression de référence régnant dans l'environnement, et la deuxième chambre (19) présente une ouverture (21), à travers laquelle la pression de référence est dirigée dans la deuxième chambre (19), ou la deuxième chambre est fermée hermétiquement et la pression de référence est une pression absolue régnant dans la deuxième chambre.

2. Capteur de pression selon la revendication 1, pour lequel la cellule de mesure (9) est logée en plus dans un support de fixation, en direction radiale.

3. Capteur de pression selon la revendication 2, pour lequel le support de fixation présente dans un espace intermédiaire entre la cellule de mesure (9) et le boîtier (1) un corps de remplissage (35) composé d'un élastomère.
